# FASCICULE DE BREVET EUROPEEN

(11) **EP 2 181 037 B1**
(45) Date de publication et mention de la délivrance du brevet: **20.06.2012**
(21) Numéro de dépôt: 08787412.9
(22) Date de dépôt: 22.08.2008
(51) Int. Cl.: B64D 27/18, B64D 27/26

(54) **DISPOSITIF D'ACCROCHAGE DE MOTEUR D'AERONEF COMPORTANT UN DISPOSITIF DE REPRISE DES EFFORTS DE POUSSEE A ENCOMBREMENT REDUIT**
VORRICHTUNG ZUR BEFESTIGUNG EINES LUFTFAHRZEUGTRIEBWERKS MIT EINER SCHUBKRAFTSAMMELVORRICHTUNG MIT VERMINDERTEN GESAMTABMESSUNGEN
DEVICE FOR ATTACHING AN AIRCRAFT ENGINE INCLUDING A THRUST FORCE COLLECTION DEVICE WITH REDUCED OVERALL DIMENSIONS

(30) Priorité: 24.08.2007 FR 0757166
(43) Date de publication de la demande: 05.05.2010
(73) Titulaire: AIRBUS OPERATIONS, 31060 Toulouse (FR)
(72) Inventeur: GUILLET, Emmanuel, F-31830 Plaisance du Touch (FR); MARTINOU, Jean-Marc, F-31240 L'union (FR); GARDES, Pascal, F-31600 Lherm (FR)
(74) Mandataire: Ilgart, Jean-Christophe
(86) Numéro de dépôt international: PCT/EP2008/061010
(87) Numéro de publication internationale: WO 2009/027333

(56) Documents cités:
- EP-A- 0 564 126
- EP-A- 0 879 759
- EP-A- 1 031 507
- FR-A- 2 887 850

## Description

### DOMAINE TECHNIQUE ET ART ANTÉRIEUR

La présente invention se rapporte de façon générale à un dispositif d'accrochage d'un moteur d'aéronef, par exemple destiné à être interposé entre une voilure d'aéronef et le moteur concerné, à un ensemble moteur comprenant un tel dispositif d'accrochage, ainsi qu'à un aéronef comportant au moins un tel dispositif d'accrochage

L'invention peut être utilisée sur tout type d'aéronef équipé de turboréacteurs ou de turbopropulseurs.

Ce type de dispositif d'accrochage, également appelé mât d'accrochage ou « EMS » (de l'anglais «Engine Mounting Structure»), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

Un tel dispositif d'accrochage est en effet prévu pour former l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, dite structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part au carter du turbomoteur, et d'autre part rapportées sur un palonnier, lui-même articulé sur la structure rigide du dispositif d'accrochage.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, les solutions proprosées antérieurement prévoient que le dispositif de reprise des efforts de poussée intègre un palonnier articulé sur la structure rigide, par l'intermédiaire d'un axe de liaison. A ce titre, il est indiqué que, pour assurer une fonction dite « Fail Safe » pour la transmission d'efforts selon la direction longitudinale, le palonnier est habituellement réalisé à l'aide de deux ferrures superposées, de même que l'axe de liaison prend quant à lui la forme d'un axé doublé. Ainsi, en cas de rupture de l'une des deux ferrures superposées constituant le palonnier, c'est l'autre ferrure qui assure seule la reprise des efforts provenant des bielles latérales, et, en cas de rupture de l'axe extérieur de l'axe de liaison doublé, c'est alors l'axe intérieur qui prend le relais pour la reprise et la transmission de ces mêmes efforts selon la direction longitudinale.

Des dispositifs d'accrochage sont connus de l'art antérieur comme dans le document EP 0879759, dans lesquels l'attache moteur arrière et le dispositif de reprise des efforts de poussée sont distincts et décalés longitudinalement. L' accrochage du moteur au longeron inférieur du caisson s'effectue au moyen d'un axe solidaire du moteur et traversant le longeron. Cet axe est généralement incliné par rapport à la direction verticale. Cette inclinaison rend le montage complexe et impose d'utiliser un outillage particulier pour permettre une telle fixation.

Par ailleurs, certains moteurs d'aéronefs ont des diamètres extérieurs relativement importants par rapport aux diamètres classiques des moteurs, ce qui impose de rapprocher le moteur au plus près de la voilure afin de réduire les impacts de garde au sol. Ce rapprochement limite alors la possibilité d'utiliser des outillages spéciaux.

Il est également connu du document FR 2 887 850 un dispositif de reprise des efforts dans lequel la fonction fail-safe est obtenue, notamment au moyen de butées prévues en avant du dispositif de reprise des efforts, les butées étant fixées directement sur le caisson. Or, dans certaines applications, le caisson présente une largeur relativement faible ne permettant pas la fixation de telles butées.

C'est par conséquent un but de la présente invention d'offrir un dispositif d'accrochage n'offrant que deux points d'interface entre le moteur et le caisson afin de pouvoir monter le moteur au plus près de la voilure sans nécessité d'outillages spéciaux.

### EXPOSÉ DE L'INVENTION

Le but précédemment énoncé est atteint par un dispositif d'accrochage de moteur pour aéronef comportant une attache moteur arrière fixée sur un caisson par deux ferrures latérales reprenant les efforts verticaux et un dispositif de reprise des efforts comportant deux bielles reliées à un palonnier relié mécaniquement au caisson par une ferrure de connexion, dans lequel la fonction fail-safe en cas de rupture d'une bielle est assurée par une des deux ferrures latérales. En fonctionnement normal, les efforts de poussée et les efforts latéraux sont repris par le caisson par un pion de poussée monté dans la ferrure de connexion.

Ainsi, on réalise un accrochage du moteur sur le caisson et une reprise des efforts en deux points d'accrochage, ce qui permet d'éviter de recourir à des outillages spéciaux pour le montage. Par ailleurs, on supprime la butée de palonnier fixée sur le mât.

En d'autres termes, on simplifie le dispositif d'accrochage en utilisant les ferrures latérales comme butée de palonnier, ce qui permet de supprimer les butées rapportées sur le caisson.

De manière avantageuse, on assure la fonction fail-safe de la connexion mécanique entre le palonnier et l'attache arrière en doublant la ferrure de connexion.

Les deux ferrures de connexions sont emboîtées, ce qui permet de réduire l'encombrement du dispositif.

Le dispositif d'accrochage offre l'avantage de permettre un démontage plus aisé du moteur, puisqu'il n'y a que deux points d'interface entre le moteur et le caisson.

La présente invention a alors principalement pour objet un dispositif d'accrochage d'un moteur d'aéronef comportant une structure rigide et des moyens d'accrochage dudit moteur sur ladite structure rigide, lesdits moyens d'accrochage comportant une attache moteur arrière et un dispositif de reprise des efforts de poussée générés par le moteur, l'attache moteur arrière étant fixée sur la structure rigide par l'intermédiaire de deux ferrures latérales fixées à la structure rigide, ledit dispositif de reprise des efforts comportant deux bielles liées mécaniquement à un palonnier par une liaison mécanique, une ferrure de connexion fixée sur l'attache moteur arrière et liée mécaniquement à la structure rigide par un axe de poussée, dans lequel les ferrures latérales comportent des moyens de butée destinés à limiter le basculement du palonnier en cas de rupture d'une bielle et assurant la transmission des efforts de poussée générés par le moteur à la structure rigide.

De manière avantageuse, la ferrure de connexion est du type fail-safe, par exemple elle comporte une ferrure intérieure et une ferrure extérieure.

Dans un premier mode de réalisation, la ferrure extérieure comporte un corps creux et une platine s'étendant vers l'avant dudit boîtier et la ferrure intérieure comporte un corps se logeant dans le corps creux de la ferrure extérieure et comportant une platine s'étendant vers l'avant à partir du corps parallèle à la première platine, les deux platines formant une chape à laquelle est mécaniquement connecté le palonnier.

Le palonnier peut alors comporter une première et une troisième partie formant chape et entourant la chape de la ferrure de connexion et une deuxième partie interposée entre la première et la troisième partie, ladite deuxième partie pénétrant dans la chape de la ferrure de connexion.

Dans un deuxième mode de réalisation, la ferrure extérieure comporte un corps formé par un boîtier sans fond inférieur, et une chape s'étendant vers l'avant à partir d'une paroi avant du boîtier, ladite paroi avant comporte une lumière mettant en communication l'intérieur du boîtier et l'espace entre les branches de la chape et la ferrure intérieure comporte un corps se logeant dans le corps de la ferrure extérieure et une platine traversant la lumière de la paroi avant et se logeant entre les branches de la chape, le palonnier comportant deux parties formant chape, ladite chape recevant la platine de la ferrure intérieure et étant reçue dans la chape de la ferrure extérieure.

Par exemple, les corps des ferrures extérieure et intérieure comportent chacun des moyens de fixation périphérique de fixation à l'attache moteur arrière par des vis de traction, les moyens de fixation de la ferrure intérieure étant serrés entre les moyens de fixation de la ferrure extérieure et l'attache moteur arrière ; ce qui permet d'utiliser les mêmes vis de traction pour fixer les deux ferrures sur l'attache moteur arrière.

Ces moyens de fixation peuvent être du type bride ou patte.

De manière préférée, chaque ferrure latérale comporte une première platine fixée par éclissage sur la structure rigide et une deuxième plaine orthogonale à la première platine et sensiblement parallèle à un longeron inférieur de la structure rigide, l'attache moteur arrière comportant une embase fixée au moyen de vis de traction à la structure rigide.

Ladite deuxième platine peut également comporte au moins deux lumières, l'embase étant munie de pions en saillie, lesdits pions comportant des alésages orthogonaux à leur axe, les pions traversant la deuxième platine par lesdites lumières et un axe étant monté dans chaque alésage des pions. Ces pions reprennent les efforts latéraux et peuvent, en cas de rupture d'une des ferrures latérales, reprendre le moment selon l'axe longitudinal.

Avantageusement, les ferrures comportent des surfaces de butées contre lesquelles le palonnier est destiné à venir en appui en cas de rupture de l'une des bielles.

De manière avantageuse, l'axe de poussée est doublé et comporte un axe intérieur et un axe extérieur. De même, les axes de liaison mécanique entre le palonnier et la ferrure de connexions peuvent également être doublés.

La présente invention a également pour objet un ensemble moteur comprenant un moteur et un dispositif d'accrochage du moteur, ledit dispositif d'accrochage étant un dispositif selon la présente invention.

La présente invention a également pour objet un aéronef comportant au moins un ensemble moteur selon la présente invention, assemblé sur une aile ou sur une partie arrière de fuselage de cet aéronef.

### BRÈVE DESCRIPTION DES DESSINS

La présente invention sera mieux comprise avec la description qui va suivre et les dessins en annexe, sur lesquels :
- la figure 1 représente une vue partiellement schématique de côté d'un ensemble moteur pour aéronef, comprenant un mât d'accrochage auquel s'applique de la présente invention,
- la figure 2 est une vue en perspective d'un premier mode de réalisation d'un dispositif d'accrochage selon la présente invention,
- la figure 3 est une vue de dessus du dispositif de la figure 2,
- la figure 4 est une vue en éclaté du dispositif de la figure 2, certains axes ayant été omis,
- la figure 5 est une vue en coupe selon le plan de coupe A-A de la figure 3,
- la figure 6 est une vue en perspective d'une partie d'un deuxième mode de réalisation d'un dispositif d'accrochage selon la présente invention représenté de manière isolée,
- la figure 7 est une vue de dessus du dispositif de la figure 6 avec les ferrures latérales et l'attache moteur arrière,
- la figure 8 est une vue en éclaté du dispositif de la figure 7, certains axes ayant été omis,
- la figure 9 est une vue en coupe selon le plan de coupe B-B de la figure 7.

### EXPOSÉ DÉTAILLÉ DE MODES DE RÉALISATION PARTICULIERS

Dans la description qui va suivre, le terme « longitudinal » est à considérer par rapport à l'axe X.

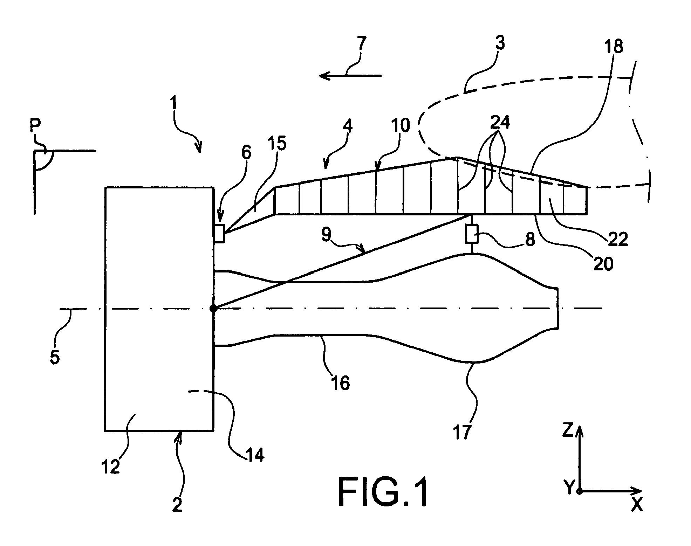

En référence à la figure 1, on voit un ensemble moteur 1 pour aéronef destiné à être fixé sous une aile 3 de cet aéronef (non représenté), cet ensemble 1 comportant un mât d'accrochage 4 selon un mode de réalisation préféré de la présente invention.

Globalement, l'ensemble moteur 1 est composé d'un moteur tel qu'un turboréacteur 2 et du mât d'accrochage 4, ce dernier étant muni notamment d'une pluralité d'attaches moteur 6, 8, 9 et d'une structure rigide 10 portant ces mêmes attaches. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6, 8, 9 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

La structure rigide 10 se présente quant à elle sous la forme classique d'un caisson formé par un longeron supérieur 18 et un longeron inférieur 20 s'étendant tous les deux selon la direction X et sensiblement dans un plan XY ou légèrement incliné par rapport à ce dernier, ainsi que par deux panneaux latéraux 22 (un seul étant visible sur la figure 1) s'étendant tous les deux selon la direction X et sensiblement dans un plan XZ. A l'intérieur de ce caisson, des nervures transversales 24 agencées selon des plans YZ et espacées longitudinalement viennent renforcer la rigidité de la structure rigide 10. Il est noté à titre indicatif que les éléments 18, 20, 22 peuvent chacun être réalisés d'un seul tenant, ou bien par l'assemblage de sections jointives.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est formée par une attache moteur avant 6, une attache moteur arrière 8 formant en réalité deux demi-attaches arrière, ainsi qu'une attache 9 formant un dispositif de reprise des efforts de poussée générés par le turbomoteur 2. Comme cela est montré schématiquement sur la figure 1, ce dispositif 9 prend par exemple la forme de deux bielles latérales 26 (une seule étant visible en raison de la vue de côté) raccordées d'une part à une partie arrière du carter de soufflante 12, et d'autre part à un palonnier 28 monté sur l'attache arrière 8 par deux axes 29.

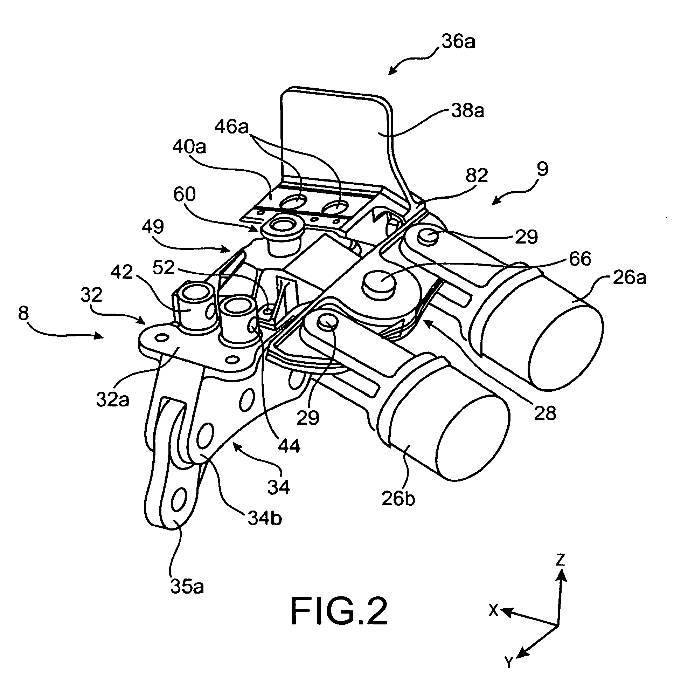

Sur la figure 2, on peut voir une vue en perspective de trois quart d'un premier mode de réalisation d'un dispositif d'accrochage selon la présente invention.

Le dispositif d'accrochage comporte l'attache moteur arrière 8 et le dispositif de reprise des efforts de poussée 9 fixé sur l'attache moteur arrière 8.

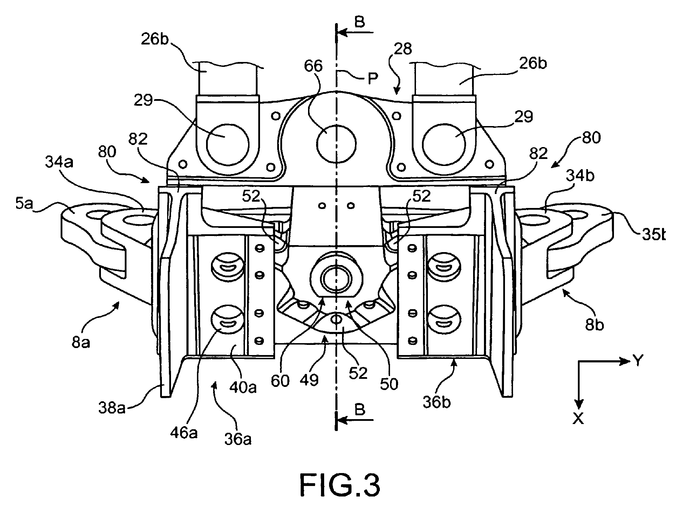

Le dispositif d'accrochage comporte un plan de symétrie P indiqué sur les figures 1 et 3 et s'étendant selon les directions X et Z.

L'attache moteur arrière 8 comporte un corps formé d'une embase 32 destinée à être disposée du côté du longeron inférieur 20 formant l'extrémité inférieure du caisson 10.

Le corps comporte également une ferrure support 34 sensiblement en forme d'arc de cercle fixé sous l'embase à l'opposé du longeron inférieur 20.

De manière avantageuse, l'embase 32 et la ferrure support 34 sont réalisées d'une seule pièce en matériau métallique.

La ferrure support 34 comporte une extrémité droite 34a et une extrémité gauche 34b reliées au moteur, plus particulièrement au carter de soufflante par des manilles 35a, 35b, auxquelles elles sont liées mécaniquement par des axes (non représentés). L'attache moteur arrière 8 forme alors, comme cela a été décrit précédemment, deux demi-attaches, une demi-attache droite 8a et une demi-attache gauche 8b.

L'attache moteur arrière 8 est fixée au caisson, par l'intermédiaire de deux ferrures latérales disposées de part du plan de symétrie du caisson et fixées par éclissage sur le caisson 10, une ferrure latérale droite 36a et une ferrure latérale gauche 36b.

La droite et la gauche sont considérées par rapport au plan P et regardant de l'avant vers l'arrière, i.e. de l'attache 6 vers l'attache 8 sur la figure 1.

Nous décrirons en détail la ferrure latérale droite 36a, la ferrure latérale gauche ayant la même structure. La ferrure latérale 36a comporte une première platine 38a contenue dans un plan XZ et une deuxième platine 40a disposée à angle droit dans un plan XY, la première platine 38a étant fixée par éclissage entre une aile latérale (non représentée) du longeron inferieur 20 contenue dans un plan XZ et un panneau latéral 22.

La deuxième platine 38a est contenue dans un plan XY parallèle au longeron inférieur 20 à distance de celui-ci, permettant le montage de l'attache moteur arrière 8 sur les ferrures latérales, comme nous le verrons par la suite.

L'embase 32 comporte, dans l'exemple représenté, en saillie de sa face 32a en regard d'une face inférieure du longeron inférieur 20, deux paires de pions 42, disposées chacune symétriquement de part d'autre du plan de symétrie P ; Les pions 42 de chaque paire sont alignés selon la direction X et comportent un alésage 44 de direction X.

Il est bien entendu que le nombre de pions peut être supérieur à deux, que l'on pourrait prévoir plus d'une paire de pions de part et d'autre du plan de symétrie P.

Nous allons décrire la fixation de la paire de pions 42 gauche sur la ferrure latérale droite 36a.

La ferrure latérale gauche 36a comporte deux lumières 46a pratiquées dans la deuxième platine 40a contenue dans le plan XY et disposées l'une par rapport l'autre de manière correspondante à la disposition des pions 42.

Sur la figure 2, les pions 42 ne sont pas représentés introduits dans les lumières 46a.

La paire de pions 42 sont montés dans la paire de lumières 46a pratiquée du côté d'une face inférieure de la deuxième platine 40a et débouche entre une face supérieure de la deuxième platine 40 et le longeron inférieur 20. Chaque alésage 44 des pions 42 reçoit un axe (non représenté) selon l'axe X.

L'embase 32 est fixée au caisson au moyen de vis de traction (non représentées), par exemple deux de chaque côté. Ces vis de traction permettent une reprise des efforts selon l'axe Z et une reprise du moment selon X.

Les pions par l'intermédiaire des axes assurent la reprise des efforts selon l'axe Z de l'attache moteur arrière 8 sur le caisson en cas de rupture des vis de traction. En outre, les pions 42 sont montés avec jeu dans la platine 40, ainsi ils ne reprennent le moment selon X qu'en cas de rupture d'une ferrure latérale.

La fixation de la paire de pions 42 droit sur la ferrure latérale gauche 36b est similaire à celle de la paire de pions gauche et ne sera donc pas décrite en détail.

Selon la présente invention, le dispositif de reprise des efforts de poussée comporte une ferrure de connexion 49 disposée entre l'embase 32 et le longeron inférieur 20 et fixée sur la face supérieure de l'embase 32 de manière symétrique par rapport au plan de symétrie P.

De manière avantageuse, cette ferrure est doublée afin d'assurer la fonction « fail-safe ».

La ferrure de connexion est en fait composée d'une ferrure de connexion extérieure 50 et d'une ferrure de connexion intérieure 56 logée dans la ferrure de connexion extérieure 50.

La ferrure de connexion extérieure comporte un corps 51 munie des pattes de fixation 52 en saillie de sa périphérie, chacune munie d'au moins un alésage 54 pour la fixation sur l'embase 32 au moyen de vis de traction (non représentées). Dans l'exemple représenté, la ferrure comporte deux pattes latérales 52 munies d'un alésage 54 et une patte 52 en saillie d'une extrémité arrière de la ferrure de connexion 50 et munie de trois alésages 54.

De manière avantageuse, des nervures de renfort 57 sont prévues entre les pattes de fixation 52 et le corps 51 de manière à augmenter la rigidité de la fixation.

On pourra prévoir de remplacer les pattes de fixation par une bride périphérique.

Le corps 51 comporte un alésage central 58 pour recevoir une première extrémité du pion de poussée 60 destiné à transmettre les efforts de poussée de la ferrure de connexion 50 au caisson, une deuxième extrémité du pion 60 étant montée dans le caisson 10.

Le corps 51 s'étend vers l'avant par une platine 62 munie d'un alésage 64 recevant un axe 66 de connexion mécanique du palonnier 28.

De manière avantageuse, la platine 62 est inclinée vers l'avant vers le bas sensiblement selon la direction des bielles 26.

Le corps 51 de la ferrure de connexion 50 est délimité par des parois latérales, une paroi arrière et une paroi supérieure définissant un volume creux, et accueille la ferrure de connexion intérieure 56, formant ainsi une ferrure de connexion « fail-safe ».

La ferrure de connexion intérieure 56 a sensiblement la même forme que la ferrure 50, elle comporte un corps 68 et des pattes latérales et arrière 70 prises en sandwich entre les pattes 52 et l'embase 32, et une platine 72 s'étendant vers l'avant parallèlement à la platine 62, munie d'un alésage 73 pour le passage de l'axe 66.

Le corps 68 comporte également un alésage 75 en regard de l'alésage 58 du corps 51 pour recevoir une extrémité du pion de poussée 60.

Les deux platines 62, 72 s'étendent parallèlement à distance l'une de l'autre, délimitant un espace pour recevoir une partie du palonnier 28.

Une ferrure de connexion 49 simple, c'est-à-dire qui n'est pas composée de deux ferrures, ne sort bien entendu pas du cadre de la présente invention.

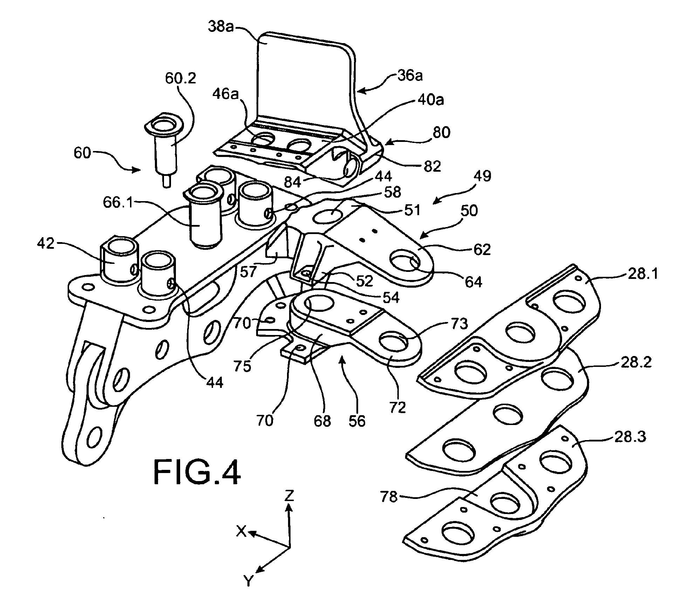

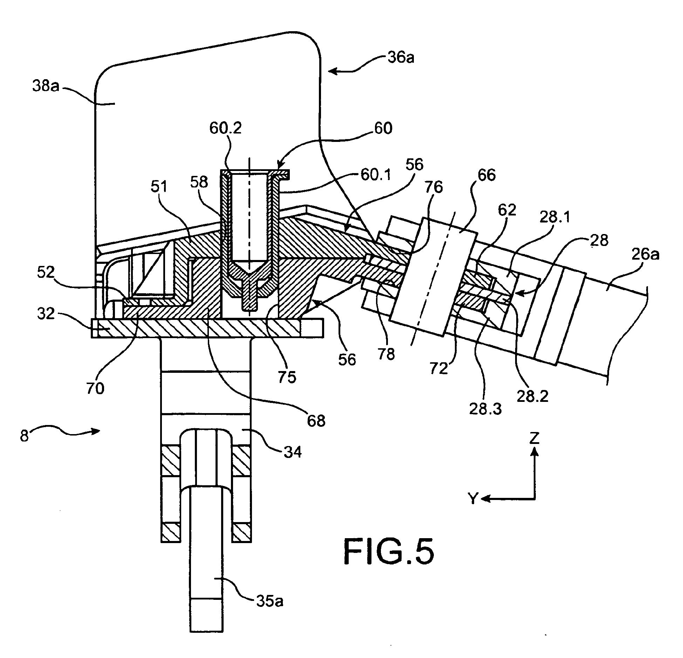

De manière avantageuse et comme cela est particulièrement visible sur les figures 4 et 5, le palonnier 28 est formé d'une première 28.1, d'une deuxième 28.2 et d'une troisième 28.3 parties superposées et assurant la fonction « fail-safe » en cas de rupture de l'une d'entre elles.

Dans l'exemple représenté, les première 28.1 et troisième 28.3 parties sont disposées respectivement au-dessus de la platine 62 et au-dessous de la platine 72, et la deuxième partie 28.2 est disposée dans l'espace ménagée entre les platines 62, 72. Ainsi la platine 62 est prise en sandwich entre la première 28.1 et la deuxième 28.2 partie du palonnier 28 et la platine 72 est prise en sandwich entre la deuxième 28.2 et troisième 28.3 partie du palonnier 28.

De manière avantageuse, une empreinte 76 est réalisée en creux dans la face de la première partie 28.1 en contact avec la platine 62, et une empreinte 78 est réalisée en creux dans la face de la deuxième partie 28.2 en contact avec la platine 72. Ces empreintes 76, 78 permettent de réduire l'épaisseur du palonnier.

En outre, ces empreintes 76, 78 ont une forme en V dont l'ouverture est orientée vers l'arrière de manière à permettre le pivotement du palonnier autour de l'axe 66 par rapport aux ferrures de connexion 50, 56.

Selon la présente invention, en cas de rupture d'une bielle 26, le palonnier 28 vient en butée contre la ferrure latérale 36 du côté de la bielle 26 intacte, ce qui permet de ne pas utiliser de ferrure de butée supplémentaire.

Selon la présente invention, chaque ferrure latérale 36a, 36 comporte une portion 80 en saillie vers l'avant au niveau de la connexion entre la première 38a et la deuxième 40a platine se terminant par une plaque de butée 82 s'étendant sensiblement selon les directions Y et Z.

Avantageusement, une nervure de renfort 84 est prévue sous la portion en saillie 80.

Nous allons maintenant décrire les chemins de reprise des efforts exercés selon les directions X, Y et Z par le dispositif selon la présente invention.

En fonctionnement normal, lorsque toutes les pièces sont intactes comme cela est représenté sur la figure 2, les efforts s'exerçant selon la direction Z sont repris par l'attache moteur arrière 8 et les ferrures latérales via les vis de traction. Les efforts latéraux s'exerçant selon la direction Y sont repris par l'attache moteur arrière 8 via les pions 42 et le pion de poussée 60, via les ferrures de connexion 50, 56.

Les efforts générés par le moteur et s'exerçant selon la direction X sont transmis des bielles 26 au palonnier 28 par les axes 29, puis du palonnier 28 aux ferrures de connexion 50, 56 par l'axe 29, puis des ferrures de connexion 50, 56 au caisson par le pion de poussée 60.

En cas de rupture de la bielle gauche, dans un fonctionnement « en mode reverse », lorsque le moteur exerce un effort vers l'avant, le palonnier 28 bascule autour de l'axe et vient en butée contre la plaque de butée 82 de la ferrure latérale droite 36a, les efforts sont alors transmis de la bielle droite 26a à la ferrure latérale droite 36a, puis de la ferrure latérale droite 36a au caisson 10.

En cas de rupture de la bielle droite 26a, la ferrure latérale gauche reprend les efforts.

Selon l'application de l'effort, une partie plus ou moins grande de cet effort est reprise par le palonnier, l'axe 66 et la ferrure de connexion.

Lorsque le moteur exerce un effort de poussée, en cas de rupture de la bielle droite, le palonnier 28 bascule autour de l'axe et vient en butée contre la plaque de butée 82 de la ferrure latérale droite 36a, les efforts de poussée sont alors repris par la ferrure latérale gauche 36a.

Selon l'application de l'effort de poussée, une partie plus ou moins grande des efforts de poussée est reprise par le palonnier, l'axe 66 et la ferrure de connexion.

En cas de rupture d'une des trois parties 28.1, 28.2, 28.3 du palonnier, les deux parties intactes transmettent les efforts des bielles 26a, 26b au pion de poussée 60.

En cas de rupture de la ferrure de connexion extérieure 50, la ferrure de connexion intérieure 56 prend le relais et transmet les efforts du palonnier 28 au caisson 10 via l'axe de poussée 60.

En fonctionnement normal, le moment selon X est repris sur l'attache arrière par les vis de traction de chaque côté de l'attache. En cas de rupture d'une ou plusieurs vis de traction, le moment selon X est repris par les pions 42.

Les moments selon Y et selon Z sont repris à la fois par l'attache moteur arrière et l'attache moteur avant.

De manière avantageuse, l'axe 60 est du type « fail-safe », i.e. il est double, celui-ci comporte, comme on peut le voir sur la figure 4, un axe extérieur 60.1 et un axe intérieur 60.2, ainsi en cas de rupture de l'axe extérieur 60.1, l'axe intérieur 60.2 prend le relais.

De manière avantageuse, l'axe 66 est du type « fail-safe », i.e. il est double, celui-ci comporte un axe extérieur et un axe intérieur, ainsi en cas de rupture de l'axe extérieur, l'axe intérieur prend le relais.

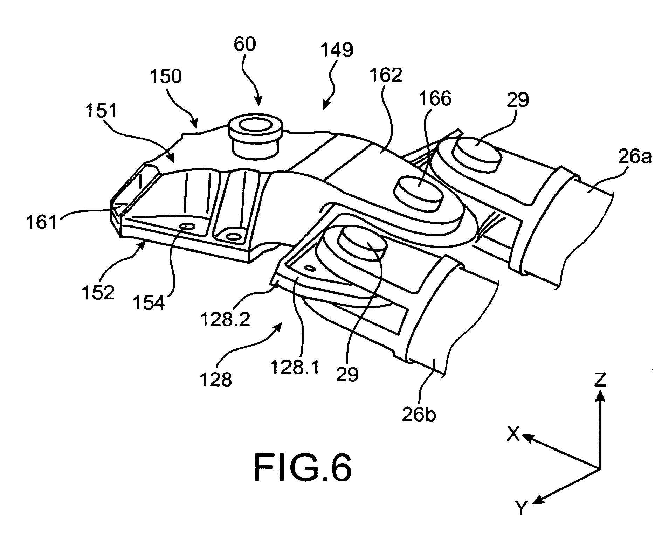

Sur la figure 6, on peut voir un dispositif d'accrochage selon un deuxième mode de réalisation de la présente invention, ce dispositif selon le deuxième mode de réalisation diffère principalement du dispositif selon le premier mode de réalisation dans les structures des ferrures de connexion et du palonnier.

A des fins de simplification, les éléments ayant sensiblement la même forme et la même fonction que dans le premier mode de réalisation seront désignés par les mêmes références.

La fixation de l'attache moteur arrière étant similaire à celle du premier mode de réalisation, la description faite en relation avec le premier mode de réalisation s'applique.

Selon ce deuxième mode de réalisation, la connexion mécanique entre le palonnier 128 et le caisson 10 est réalisée par une ferrure de connexion 149, avantageusement réalisée par deux ferrures de connexions emboîtées l'une dans l'autre, une ferrure extérieure 150 et une ferrure intérieure 152.

La ferrure extérieure 150 comporte un corps 151 bordé latéralement et vers l'arrière par une bride de fixation 161 percée d'alésages 154 pour permettre la fixation de la première ferrure 150 sur l'embase 32 au moyen de vis de traction (non représentées).

On pourrait envisager comme dans le premier mode de réalisation, de prévoir des pattes de fixation.

Le corps 151 est délimité par deux parois latérales 153, une paroi supérieure 155, une paroi arrière 157, et une paroi avant 159.

Le corps 151 comporte également un alésage 160 sensiblement au centre de sa paroi supérieure 155 pour recevoir une extrémité d'un pion de poussée 60.

La ferrure de connexion extérieure 150 comporte également une chape 162 s'étendant de la paroi avant 159, cette chape recevant le palonnier 128.

La chape 162 est inclinée vers l'avant vers le bas sensiblement selon la direction d'inclinaison des bielles 26a, 26b.

La chape 162 est percée d'un alésage 164 recevant un axe 166.

La paroi avant 159 est percée pour permettre le passage d'une platine 168 de la deuxième ferrure 152.

La ferrure intérieure 152 comporte un corps 170 de forme et de dimensions apte à pénétrer dans le corps 151 de la première ferrure 150 et la platine 168 en saillie d'une face avant du corps 170.

Le corps 170 comporte une bride périphérique 172 également percée d'alésages correspondant à ceux de la bride 156 de la ferrure extérieure 150 et s'interposant entre la bride 156 de la ferrure extérieure et l'embase 32.

Le corps 170 comporte un alésage 171 en regard de l'alésage 160 du corps 151 pour recevoir l'extrémité de l'axe de poussée 60.

La platine 168 comporte un alésage 169 en regard de ceux de la chape 162 pour le passage de l'axe 166.

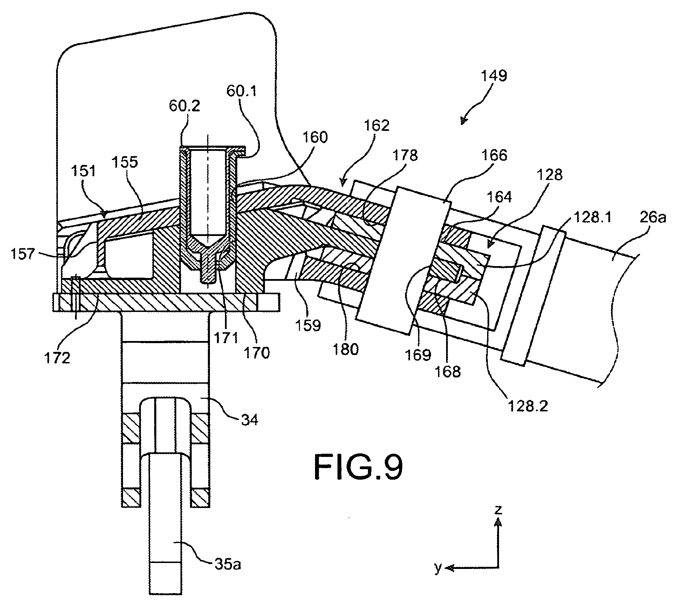

Lors de la mise en place de la ferrure intérieure 152 dans la ferrure extérieure 150, la platine traverse la paroi avant 159 du corps 151 de la ferrure de connexion extérieure 150 et vient se loger entre les deux branches de la chape 162, comme cela est particulièrement visible sur la figure 9.

La platine 168 s'étend parallèlement aux branches de la chape 162 et à distance de celles-ci, ménageant ainsi deux espaces.

Une ferrure de connexion 149 simple, c'est-à-dire qui n'est pas composée de deux ferrures, ne sort bien entendu pas du cadre de la présente invention.

De manière avantageuse, le palonnier 128 est formé de deux palonniers 128.1, 128.2 pénétrant respectivement dans les espaces ménagés entre la chape 162 et la platine 168.

Ainsi en cas de rupture de l'un des palonniers 128.1, 128.2, l'autre palonnier prend le relais pour transmettre les efforts.

Les deux palonniers 128.1, 128.2 sont de forme similaire et comportent avantageusement une empreinte 178, 180 sur leur face en contact avec la platine 168 pour recevoir cette platine 168.

Chaque palonnier 128.1, 128.2 comporte deux alésages latéraux pour la connexion aux bielles 26a, 26b et un alésage central pour la connexion aux ferrures de connexion 150, 152.

Les empreintes 178, 180 ont une forme de V dont l'ouverture est orientée vers l'arrière, permettant le pivotement du palonnier autour de l'axe 168.

Selon la présente invention et de manière similaire au premier mode de réalisation, chaque ferrure latérale 36a comporte une portion 80 en saillie vers l'avant au niveau de la connexion entre la première 38a et la deuxième 40a platine se terminant par une plaque de butée 82 s'étendant sensiblement selon les directions Y et Z.

Avantageusement, une nervure de renfort 84 est prévue sous la portion en saillie 80.

Les empreintes 178, 180 autorisent un angle de rotation suffisant pour permettre au palonnier de venir en butée contre l'une des portions 80 en saillie des ferrures latérales.

Nous allons maintenant décrire les chemins de reprise des efforts exercés selon les directions X, Y et Z par le dispositif selon le deuxième mode de réalisation de la présente invention.

En fonctionnement normal, lorsque toutes les pièces sont intactes comme représentées sur la figure 2, les efforts s'exerçant selon la direction Z sont repris par l'attache moteur arrière 8 et les ferrures latérales via les pions 42 et les axes introduits dans les pions 42. Les efforts latéraux s'exerçant selon la direction Y sont repris par l'attache moteur arrière 8 et le pion de poussée 60, via les ferrures de connexion 150, 152. Les efforts de poussée générés par le moteur et s'exerçant selon la direction X sont transmis des bielles 26 au palonnier 128 par les axes 29, puis du palonnier 128 aux ferrures de connexion 150, 152 par l'axe 166, puis des ferrures de connexion 150, 152 au caisson 10 par le pion de poussée 60.

En cas de rupture de la bielle gauche, dans un fonctionnement « en mode reverse », lorsque le moteur exerce un effort vers l'avant, le palonnier 128 bascule autour de l'axe et vient en butée contre la plaque de butée 82 de la ferrure latérale droite 36a, les efforts sont alors transmis de la bielle droite 26a à la ferrure latérale droite 36a, puis de la ferrure latérale droite 36a au caisson 10.

En cas de rupture de la bielle droite 26a, la ferrure latérale gauche reprend les efforts.

Selon l'application de l'effort, une partie plus ou moins grande de cet effort est reprise par le palonnier, l'axe 66 et la ferrure de connexion.

Lorsque le moteur exerce un effort de poussée, en cas de rupture de la bielle droite, le palonnier 128 bascule autour de l'axe et vient en butée contre la plaque de butée 82 de la ferrure latérale droite 36a, les efforts de poussée sont alors repris par la ferrure latérale gauche 36a.

Selon l'application de l'effort de poussée, une partie plus ou moins grande des efforts de poussée est reprise par le palonnier, l'axe 66 et la ferrure de connexion.

En cas de rupture d'un des deux palonniers 128.1, 128.2, l'autre palonnier transmet les efforts de poussée transmis par les bielles 26a, 26b au pion de poussée 60.

En cas de rupture de la ferrure de connexion extérieure 150, la ferrure de connexion intérieure 152 prend le relais et transmet les efforts du palonnier 128 au caisson 10 via l'axe de poussée 60.

En fonctionnement normal, le moment selon X est repris sur l'attache arrière par les vis de traction de chaque côté de l'attache. En cas de rupture d'une ou plusieurs vis de traction, le moment selon X est repris par les pions 42.

Les moments selon Y et selon Z sont repris à la fois par l'attache moteur arrière et l'attache moteur avant.

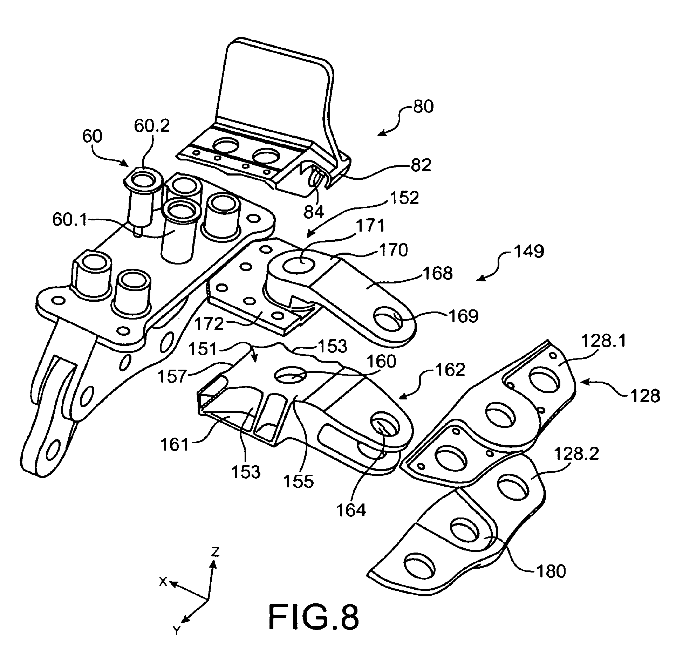

Comme dans le premier mode de réalisation, l'axe 60 est avantageusement du type « fail-safe », i.e. il est double, celui-ci comporte comme on peut le voir sur les figure 8 et 9 un axe extérieur 60.1 et un axe intérieur 60.2, ainsi en cas de rupture de l'axe extérieur 60.1, l'axe intérieur 60.2 prend le relais.

De même, l'axe 166 est avantageusement du type « fail-safe », i.e. il est double, celui-ci comporte un axe extérieur et un axe intérieur, ainsi en cas de rupture de l'axe extérieur, l'axe intérieur prend le relais.

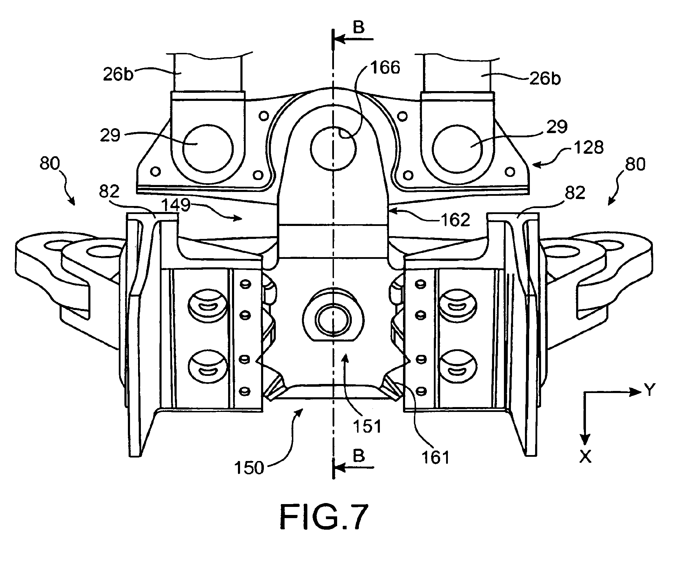

Les dispositifs de reprise des efforts représentés sur les figures 2 à 9 viennent d'être décrits uniquement à titre d'exemple non limitatif. Des modifications pourront être apportées sans sortir du cadre de l'invention. Par exemple, on pourrait prévoir une fixation de l'attache arrière sur les ferrures latérales de manière différente. En outre, la forme de la ferrure de connexion pourrait être modifiée en fonction de la configuration de l'espace disponible, ainsi que la forme et le nombre de pièces composant le palonnier.

La ferrure de connexion 49 est du type fail-safe et comporte en fait deux ferrures 50, 56 l'une dans l'autre, l'axe 66 entre le palonnier et cette ferrure est monté sans jeu dans les deux ferrures (figure 5). Par conséquent les deux ferrures sont sollicitées simultanément en fonctionnement normal, ceci s'applique également au deuxième mode de réalisation.

## Revendications

1. Dispositif d'accrochage d'un moteur d'aéronef comportant une structure rigide (10) et des moyens d'accrochage dudit moteur sur ladite structure rigide, lesdits moyens d'accrochage comportant une attache moteur arrière (8) et un dispositif (9) de reprise des efforts de poussée générés par le moteur, l'attache moteur arrière (8) étant fixée sur la structure rigide par l'intermédiaire de deux ferrures latérales fixées sur la structure rigide, ledit dispositif de reprise des efforts (9) comportant deux bielles (26a, 26b) liées mécaniquement à un palonnier (28, 128) par une liaison mécanique, une ferrure de connexion (49, 149) fixée sur l'attache moteur arrière (8) et liée mécaniquement à la structure rigide (10) par un axe de poussée (60), dans lequel le palonnier est connecté mécaniquement à la ferrure de connexion et les ferrures latérales comportent des moyens de butée destinés à limiter le basculement du palonnier (28) en cas de rupture d'une bielle (26a, 26b) et assurant la transmission des efforts de poussée générés par le moteur à la structure rigide (10).

2. Dispositif d'accrochage selon la revendication 1, dans lequel la ferrure de connexion comporte une ferrure extérieure (50, 150) et une ferrure intérieure (56, 152).

3. Dispositif selon la revendication 2 dans lequel la ferrure extérieure (50) comporte un corps creux (51) et une platine s'étendant vers l'avant dudit boîtier et la ferrure intérieure (56) comporte un corps se logeant dans le corps creux (51) de la ferrure extérieure (50) et comportant une platine s'étendant vers l'avant à partir du corps parallèle à la première platine, les deux platines formant une chape à laquelle est mécaniquement connecté le palonnier (28).

4. Dispositif d'accrochage selon la revendication précédente, dans lequel le palonnier (28) comporte une première (28.1) et une troisième (28.3) partie formant chape et entourant la chape de la ferrure de connexion (49) et une deuxième partie (28.2) interposée entre la première (28.1) et la troisième (28.3) partie, ladite deuxième partie (28.2) pénétrant dans la chape de la ferrure de connexion (49).

5. Dispositif d'accrochage selon la revendication 2 dans lequel la ferrure extérieure (150) comporte un corps (151) formé par un boîtier sans fond inférieur, et une chape (162) s'étendant vers l'avant à partir d'une paroi avant du boîtier, dans lequel ladite paroi avant (159) comporte une lumière mettant en communication l'intérieur du boîtier et l'espace entre les branches de la chape (162) et la ferrure intérieure (152) comporte un corps (171) se logeant dans le corps de la ferrure extérieure (150) et une platine (168) traversant la lumière de la paroi avant (159) et se logeant entre les branches de la chape (162), le palonnier (128) comportant deux parties (128.1, 128.2) formant chape, ladite chape recevant la platine (168) de la ferrure intérieure (152) et étant reçue dans la chape (162) de la ferrure extérieure (150).

6. Dispositif d'accrochage selon l'une des revendications 3 à 5 dans lequel les corps (51, 151) des ferrures extérieure (50, 150) et intérieure (56, 152) comportent chacun des moyens de fixation (52, 70, 161, 172) périphériques à l'attache moteur arrière (8) par des vis de traction, les moyens de fixation (70, 172) de la ferrure intérieure (56, 152) étant serrés entre les moyens de fixation (52, 161) de la ferrure extérieure (50, 150) et l'attache moteur arrière (8).

7. Dispositif d'accrochage selon l'une des revendications 1 à 6, dans lequel chaque ferrure latérale (36a) comporte une première platine (38a) fixée par éclissage sur la structure rigide (10) et une deuxième platine (40a) orthogonale à la première platine (38a) et sensiblement parallèle à un longeron inférieur (20) de la structure rigide (10), l'attache moteur arrière (8) comportant une embase (32) fixée au moyen de vis de traction à la structure rigide.

8. Dispositif d'accrochage selon la revendication 7, dans lequel ladite deuxième platine (40a) comporte au moins deux lumières, l'embase (32) étant munie de pions (42) en saillie, lesdits pions (42) comportant des alésages orthogonaux à leur axe, les pions (42) traversant la deuxième platine (40a) par lesdites lumières avec jeu et un axe étant monté dans chaque alésage des pions (42).

9. Ensemble moteur comprenant un moteur et un dispositif d'accrochage du moteur, ledit dispositif d'accrochage étant un dispositif selon l'une quelconque des revendications précédentes.

10. Aéronef comportant au moins un ensemble moteur selon la revendication 9, assemblé sur une aile ou sur une partie arrière de fuselage de cet aéronef.

## Claims

1. Aircraft engine attachment device comprising a rigid structure (10) and means for attaching said engine on said rigid structure, in which said attachment means comprise a rear engine attachment (8) and a device (9) for taking up thrust forces generated by the engine, in which the rear engine attachment (8) is attached to the rigid structure by means of two lateral fittings attached to the rigid structure, in which said force take-up device (9) comprises two connecting rods (26a, 26b) mechanically connected to a spreader beam (28, 128) by a mechanical connection, a connection fitting (49, 149) attached to the rear engine attachment (8) and mechanically connected to the rigid structure (10) by a thrust pin (60), in which the spreader beam is mechanically connected to the connection fitting and the lateral fittings comprise stop means intended to limit the pivoting of the spreader beam (28) if a connecting rod (26a, 26b) breaks and ensuring the transmission of thrust forces generated by the engine to the rigid structure (10).

2. Attachment device according to claim 1, in which the connection fitting comprises an external fitting (50, 150) and an internal fitting (56, 152).

3. Device according to claim 2, in which the external fitting (50) comprises a hollow body (51) and a plate extending toward the front of said casing and the internal fitting (56) comprises a body housed in the hollow body (51) of the external fitting (50)
and comprising a plate extending forward from the body parallel to the first plate, in which the two plates form a clevis mounting to which the spreader beam (28) is mechanically connected.

4. Attachment device according to the previous claim, in which the spreader beam (28) comprises a first (28.1) and a third (28.3) portion forming a clevis mounting and surrounding the clevis mounting of the connection fitting (49) and a second portion (28.2) inserted between the first (28.1) and the third (28.3) portions, in which said second portion (28.2) penetrates the clevis mounting of the connection fitting (49).

5. Attachment device according to claim 2, in which the external fitting (150) comprises a body (151) formed by a casing without a base, and a clevis mounting (162) extends forward from a front wall of the casing; said front wall (159) comprises a hole enabling communication between the inside of the casing and the space between the branches of the clevis mounting (162), and the internal fitting (152) comprises a body (171) housed in the body of the external fitting (150) and a plate (168) passing through the hole of the front wall (159) and housed between the branches of the clevis mounting (162), the spreader beam (128) comprises two portions (1.28.1, 128.2) forming a clevis mounting; said clevis mounting receives the plate (168) of the internal fitting (152) and is received in the clevis mounting (162) of the external fitting (150).

6. Attachment device according to one of claims 3 to 5, in which the bodies (51, 151) of the external (50, 150) and internal (56, 152) fittings each comprise means for peripheral attachment (52, 70, 161, 172) to the rear engine attachment (8) by tension bolts, in which the means (70, 172) for attaching the internal fitting (56, 152) are clamped between the means (52, 161) for attaching the external fitting (50, 150) and the rear engine attachment (8).

7. Attachment device according to one of claims 1 to 6, in which each lateral fitting (36a) comprises a first plate (38a) attached by fishplating to the rigid structure (10) and a second plate (40a) orthogonal to the first plate (38a) and substantially parallel to a lower spar (20) of the rigid structure (10), in which the rear engine attachment (8) comprises a base (32) attached by tension bolts to the rigid structure.

8. Attachment device according to claim 7, in which said second plate (40a) comprises at least two holes, in which the base (32) is equipped with projecting pins (42), said pins (42) comprise bores orthogonal to their axis, the pins (42) pass through the second plate (40a) by way of said holes and an internal pin is mounted in each bore of the pins (42).

9. Engine assembly including an engine and an engine attachment device, in which said attachment device is a device according to any one of the previous claims.

10. Aircraft comprising at least one engine assembly according to claim 9, assembled on a wing or on a rear portion of the fuselage of said aircraft.

## Patentansprüche

1. Aufhängevorrichtung für ein Luftfahrzeugtriebwerk, die eine starre Struktur (10) und Mittel zum Aufhängen des Triebwerks an der starren Struktur aufweiset, wobei die bzw. Aufhangemittel eine hintere Triebwerkbefestigung (8) und eine Vorrichtung (9) zur Aufnahme von durch das Triebwerk erzeugten Schubkräften aufweisen, wobei die hintere Triebwerkbefestigung (8) an der starren Struktur über zwei an der starren Struktur befestigte Seitenbeschläge befestigt ist und die Vorrichtung zur Aufnahme von Kräften (9) zwei Stangen (26a, 26b), die durch eine mechanische Verbindung mechanisch mit einer Traverse (28, 128) verbunden sind, und einen Anschlussbeschlag (49, 149), der an der hinteren Triebwerkbefestigung (8) befestigt ist und durch eine Schubachse (60) mechanisch mit der starren Struktur (4) verbunden ist, aufweist, wobei die Traverse mit dem Anschlussbeschlag mechanisch verbunden ist und die Seitenbeschläge Anschlagmittel zur Beschränkung des Kippens der Traverse (28) im Falle eines Bruchs einer Stange (26a, 26b) aufweisen, und die Übertragung von durch des Triebwerk erzeugten Schubkräften auf die starre Struktur (10) gewährleistet.

2. Aufhängevorrichtung nach Anspruch 1, wobei der Anschlussbeschlag einen äußeren Beschlag (50, 150) und einen inneren Beschlag (56, 152) aufweist.

3. Vorrichtung nach Anspruch 2, wobei der äußere Beschlag (50) einen Höhlkörper (51) und eine sich zur Vorderseite des Bauteils erstreckende Platte aufweist und der innere Beschlag (56) einen Körper aufweist, der in dem Hohlkörper (51) des äußeren Beschlags (50) sitzt und eine sich vom Körper aus nach vorne erstreckende, zur ersten Platte parallele Platte
aufweist, wobei die zwei Platten eine Kappe bilden, mit dem die Traverse (28) mechanisch verbunden ist.

4. Aufhängevorrichtung nach dem vorhergehenden Anspruch, wobei die Traverse (28) einen ersten (28.1) und einen dritten (28.3) Teil, die eine Kappe bilden und die Kappe des Anschlussbeschlags (49) umschließen, und einen zweiten Teil (28.2), der sich zwischen dem ersten (28.1) und dem dritten (28.3) Teil befindet, wobei der zweite Teil (28.2) in der Kappe des Anschlussbeschlags (49) eingreift, aufweist.

5. Aufhängevorrichtung nach Anspruch 2, wobei der äußere Beschlag (150) einen Körper (151), der durch ein kastenförmiges Bauteil ohne Unterboden gebildet ist, und eine Kappe (162), der sich von einer Vorderwand des kastenförmigen Bauteils aus nach vorne erstreckt, aufweist, wobei die Vorderwand (159) eine Öffnung aufweist, die eine Verbindung zwischen dem Inneren des kastenförmigen Gebildes und dem Zwischenraum zwischen den Armen der Kappe (162) herstellt, und der innere Beschlag (152) einen Körper (171), der im Körper des äußeren Beschlags (150) sitzt, und eine Platte (168), die durch die Öffnung der Vorderwand (159) hindurchgeht und zwischen den Armen der Kappe (162) sitzt, aufweist, und die Traverse (128) zwei eine Kappe bildende Teile (128.1, 128.2) aufweist, wobei die Kappe die Platte (168) des inneren Beschlags (152) aufnimmt und in der Kappe (162) des äußeren Beschlags (150) aufgenommen ist.

6. Aufhängevorrichtung nach einem der Ansprüche 3 bis 5, wobei die Körper (51, 151) des äußeren Beschlags (50, 150) und des inneren Beschlags (56, 152) jeweils periphere Mittel zur Befestigung (52, 70, 161, 172) an der hinteren Triebwerkbefestigung (8) über Zugschrauben aufweisen, wobei die Befestigungsmittel (70, 172) des inneren Beschlags (56, 152) zwischen die Befestigungsmittel (52, 161) des äußeren Beschlags (50, 150) und die hintere Triebwerkbefestigung (8) gepresst sind.

7. Aufhängevorrichtung nach einem der Ansprüche 1 bis 6, wöbei jeder Seitenbeschlag (36a) eine erste Platte (38a), die durch eine Laschenverbindung an der starren Struktur (10) befestigt ist, und eine zweite Platte (40a), die orthogonal zur ersten Platte (38a) und im wesentlichen parallel zu einem. Unteren Träger (20) der starren Struktur (10) ist, aufweist, wobei die hintere Triebwerkaufhängung (8) eine Halterung (32) aufweist, die über Zugschrauben an der starren Struktur befestigt ist.

8. Aufhängevorrichtung nach Anspruch 7, wobei die zweite Platte (40a) mindestens zwei Öffnungen ausweist, die Halterung (32) mit vorspringenden Bolzen (42) ausgestattet ist, wobei die Bolzen (42) zu ihrer Achse orthogonale Bohrungen aufweisen, die Bolzen (42) durch die Öffnungen mit einem Spiel durch die zweite Platte (40a) hindurchgehen und in jeder Bohrung der Bolzen (42) eine Achse angebracht ist.

9. Triebwerkanordnung, die ein Triebwerk und eine Aufhängevorrichtung für das Triebwerk umfasst, wobei die Aufhängevorrichtung eine Vorrichtung nach einem der vorhergehenden Ansprüche ist.

10. Luftfahrzeug, das mindestens eine Triebwerkanordnung nach Anspruch 9 umfasst, die an einer Tragfläche oder einem hinteren Teil des Rumpfes dieses Luftfahrzeugs angeordnet ist.
